# EUROPEAN PATENT APPLICATION

(11) **EP 2 394 952 A2**
(43) Date of publication of application: **14.12.2011**
(21) Application number: 10738763.1
(22) Date of filing: 05.02.2010
(51) Int. Cl.: B82B 3/00

(54) **NANOPARTICLES PREPARED USING CARBON NANOTUBE AND PREPARATION METHOD THEREFOR**

(30) Priority: 05.02.2009 KR 20090009366; 04.02.2010 KR 20100010573
(71) Applicant: Research & Business Foundation of Sungkyunkwan University, Gyeonggi-do 440-746 (KR); Dayou Smart Aluminium Co., Ltd., Jeollanam-do 502-240 (KR)
(72) Inventor: SO, Kang Pyo, Namwon-si Jeollabuk-do 590-881 (KR); KIM, Eun Sun, Bucheon-si Gyeonggi-do 421-803 (KR); LEE, Young Hee, Jeonju-si Jeollabuk-do 561-728 (KR)
(74) Representative: Becker Kurig Straus
(86) International application number: PCT/KR2010/000729
(87) International publication number: WO 2010/090479

(57) **Abstract**

Disclosed are a method for preparing a nanoparticle by using a carbon nanotube, and the nanoparticle prepared by the method. In the disclosed method, by using a carbon nanotube having a physically solid structure and a chemically solid bond, a powder particle made of metal, polymer, ceramic or the like is milled to a nano-size. Also, the nanoparticle prepared by the method has a small size and includes the carbon nanotube. Thus, when the method is applied to a highly oxidative metal, the nanoparticle can be applied to related fields requiring ignitability such as solid fuel, gunpowder, and the like. Also, the carbon nanotube has good mechanical properties and electrical conductivity, and thus can be applied to the related products.

## Description

### [Technical Field]

The present invention relates to a method for preparing a nanoparticle, in which a powder particle is milled to a nano-size by using a carbon nanotube.

### [Background Art]

A nanoparticle has a much smaller particle size than the wavelength of ultraviolet light or visible light. Also, it forms a relatively large grain boundary with respect to its mass, in which in the interface, a greater number of atoms or molecules than a bulk material are positioned. Thus, it is possible to form a micro/nano hybrid structure but also change physical, chemical, and optical characteristics according to the size and morphology of the particle.

In view of the applications of nanoparticles, research in various fields, such as catalyst, photoelectron, advanced materials, nonlinear optics, biotechnology including medicine, has been actively conducted.

A nanoparticle may be an organic material (e.g. polymer), an inorganic material (e.g. metal), a ceramic material, or the like. In the preparation of the nanoparticle, an organic nanoparticle may be prepared by polymerization such as suspension polymerization, emulsion polymerization, dispersion polymerization, self assembly, or the like, and an inorganic nanoparticle may be prepared by pyrolysis of an organometallic precursor, vacuum deposition, a colloid method, electrolytic and electroless reduction, or the like.

As an example by a solution technique, Korea Application No. 10-2006-0101844 discloses a method for preparing a silver nanoparticle, in which a compound including silver is dissolved in a polar solvent, and a reducing agent is used. The silver nanoparticle prepared by the method has uniformity but requires a complicated preparation process. Thus, there is a limitation in terms of the production output.

As another example of a nanoparticle preparation method, Korea Application No. 10-2007-7004335 discloses a vapor condensation method. In the method, a metal is vaporized by a high temperature and a high-degree vacuum, and then rapidly condensed. When the vaporized metallic atoms in a gaseous phase are rapidly frozen, the condensation is also quickly carried out. Accordingly, a large amount of crystal nuclei are generated, and the crystal and the particle become smaller. By such a principle, a nanoparticle is generated. In this method, a high temperature and a high-degree vacuum are required, and for preparation of a nanoparticle, the metal has to be completely vaporized. Thus, there is a limitation in terms of the production output.

Such a conventional nanoparticle preparation method employs a so-called bottom-up method, which is a nanostructure preparation method for growing clusters in atoms or ions. For this reason, this method has a disadvantage in that it requires a process for generating atoms or ions at the initial stage, and the crystal control has to be carried out at a nano-size. In the solution technique, the density has to be controlled, and in the vaporization technique, gaseous atoms have to be generated. Thus, there is a limitation in terms of the productivity.

### [Disclosure]

### [Technical Problem]

An object of the present invention is to provide a method for preparing a nanoparticle by using a carbon nanotube. The carbon nanotube is structurally stable and good in terms of mechanical properties. Accordingly, the carbon nanotube can mill a material by colliding with the material. Also, since the carbon nanotube has a nano-size, it is possible to mill the material to a nano-size. In the present invention, there is provided a method for preparing a bulk material into a nanoparticle by using such a novel method unlike a conventional method.

Another object of the present invention is to provide a nanoparticle prepared by the method.

### [Technical Solution]

In accordance with an aspect of the present invention, there is provided a method for preparing a nanoparticle, the method including the steps of: (a) preparing a mixture of a powder particle and a carbon nanotube; and (b) ball milling the mixture.

The method may further include the step of purging with argon (Ar) during the step (a).

In the step (b), ball milling may be carried out for 0.5 to 12 hours at 100 rpm to 5000 rpm so as to mill the mixture of the powder particle and the carbon nanotube.

In accordance with another aspect of the present invention, there is provided a method for preparing a nanoparticle, the method including the steps of: (a) mixing a powder particle with a carbon nanotube; (b) introducing balls for colliding with the mixture; (c) sealing the mixture and the balls within a container; and (d) ball milling the mixture by physically rotating the container including the mixture and the balls.

In accordance with a further aspect of the present invention, there is provided a nanoparticle composite including a powder particle milled by a carbon nanotube through ball milling, and the carbon nanotube.

In the present invention, a carbon nanotube used for preparing a nanoparticle may be at least one selected from the group consisting of a single walled carbon nanotube (SWNT), a double-walled carbon nanotube (DWNT), a thin multi-walled carbon nanotube, and a multi-walled carbon nanotube (MWNT). The carbon nanotube includes a carbon having a sp² hybrid bond, and is formed in a structurally stable shape. For this reason, it shows mechanical properties stronger (100 times or more) than steel.

In order to carry out the inventive method, it is required that a carbon nanotube is subjected to a physical impact so that it can mill a powder particle. For this, a ball milling process for physically impacting the carbon nanotube is required. Also, in a general ball mill, in a process for milling a powder particle, the size of the powder particle is reduced. However, when the size is reduced to a critical size, the particle size is increased again due to welding between particles. The carbon nanotube is attached on the surface of a powder particle, thereby preventing this problem from occurring.

The inventive preparation method is divided into a powder particle milling process by ball milling and a nanoparticle generating process by a carbon nanotube. In order to effectively generate a nanoparticle, before the step of ball milling, a heat treatment step for improving the crystallinity of the carbon nanotube may be further included.

In the present invention, a nanoparticle may include a metallic, polymer, or ceramic nanoparticle, but may further include various other materials as required.

In the present invention, a metal may be selected from, but not limited to, the group consisting of gold, silver, copper, aluminum, manganese, iron, tin, zinc, titanium, and the like.

Also, a polymer may be selected from, but not limited to, the group consisting of polyphosphazene, polylactide, polylactide-co-glycolide-polycaprolactone, polyanhydride, polymalicacid, polyalkylcyanoacrylate, polyhydroxybutylate, polycarbonate, polyorthoester, polyethyleneglycol, poly-L-lysine, polyglycolide, polymethylmethaacrylate, polyvinyl pyrrolidone, and the like.

Also, a ceramic may be selected from, but not limited to, the group including oxides (such as alumina, zirconia, etc.), carbides (such as tungsten carbide (WC), titanium carbide (TiC), silicon carbide (SiC) etc.), nitrides (such as cubic boron nitride (CBN), titanium nitride (TiN), silicon nitride (Si3N4), etc.), and the like.

The term "powder particle" used in the specification of the present invention indicates a particle which includes a metallic material, a polymer material, or a ceramic material, and has a diameter ranging from 1µm to several tens of cm.

The term "nano particle" used in the specification of the present invention indicates a particle having a diameter ranging from 20 nm to 900 nm.

### [Advantageous Effects]

According to the present invention, a carbon nanotube is used to prepare a nanoparticle made of metal, polymer, ceramic, or the like. Accordingly, it may be widely applied to the various fields employing nanoparticles, such as medicine, optics, or materials. Also, the prepared nanoparticle shows the characteristic of a material, the property caused by the change of the material into the nanoparticle, and the characteristic of a carbon nanotube included in the nanoparticle. For example, when an aluminum nanoparticle is prepared by using a carbon nanotube, the nanoparticle may include the lightness and highly oxidative property of aluminum, the high specific surface and small crystal size of the nanoparticle, and mechanical, thermal, and electrical characteristics of the carbon nanotube.

### [Description of Drawings]

The foregoing and other objects, features and advantages of the present invention will become more apparent from the following detailed description when taken in conjunction with the accompanying drawings in which:
FIG. 1 is a conceptual view illustrating the mechanisms in respective steps in a method for preparing a nanoparticle by using a carbon nanotube, according to the present invention;
FIG. 2 is a process for preparing an aluminum nanoparticle by using a carbon nanotube, according to a preferred embodiment of the present invention;
FIG. 3 shows photographs of an aluminum nanoparticle prepared by using a carbon nanotube according to a preferred embodiment of the present invention, before/after the preparation;
FIG. 4 shows electron microscopic photographs (SEM) of a carbon nanotube and aluminum which are used for preparing an aluminum nanoparticle by using a carbon nanotube, according to a preferred embodiment of the present invention;
FIG. 5 shows electron microscopic photographs (SEM) of an aluminum nanoparticle prepared by using a carbon nanotube, according to a preferred embodiment of the present invention;
FIG. 6 shows analysis results of EDS on an aluminum nanoparticle prepared by using a carbon nanotube, according to a preferred embodiment of the present invention;
FIG. 7 shows analysis results by a transmission electron microscope (TEM), of an aluminum nanoparticle prepared by using a carbon nanotube, according to a preferred embodiment of the present invention;
FIG. 8 shows a particle size measurement result (DLS) of an aluminum nanoparticle prepared by using a carbon nanotube, according to a preferred embodiment of the present invention;
FIG. 9 shows results of mechanical property measurement of a test sample of an aluminum nanoparticle prepared by using a carbon nanotube, according to a preferred embodiment of the present invention;
FIG. 10 shows a result of electric conductivity measurement of aluminum for casting, in which an aluminum nanoparticle prepared by using a carbon nanotube, according to a preferred embodiment of the present invention, is applied;
FIG. 11 shows photographs of the measurement of the oxidative property of an aluminum nanoparticle prepared by using a carbon nanotube, according to a preferred embodiment of the present invention;
FIG. 12 shows analysis results of DTA, which are obtained by measuring the oxidative property of an aluminum nanoparticle prepared by using a carbon nanotube, according to a preferred embodiment of the present invention;
FIG. 13 shows photographs of a polymer nanoparticle prepared by using a carbon nanotube according to a preferred embodiment of the present invention, before/after the preparation;
FIG. 14 shows electron microscopic photographs (SEM) of a polymer nanoparticle prepared by using a carbon nanotube, according to a preferred embodiment of the present invention;
FIG. 15 shows photographs of a ceramic nanoparticle prepared by using a carbon nanotube according to a preferred embodiment of the present invention, before/after the preparation;
FIG. 16 shows electron microscopic photographs (SEM) of a ceramic nanoparticle prepared by using a carbon nanotube according to a preferred embodiment of the present invention, before/after the preparation;
FIG. 17 shows a conceptual view of the applicability of a nanoparticle prepared by using a carbon nanotube according to a preferred embodiment of the present invention;
FIG. 18 shows electron microscopic photographs (SEM) of an iron nanoparticle prepared by using a carbon nanotube according to a preferred embodiment of the present invention, before/after the preparation; and
FIG. 19 shows electron microscopic photographs (SEM) of a titanium nanoparticle prepared by using a carbon nanotube according to a preferred embodiment of the present invention, before/after the preparation.

### [Best Modes for carrying out the Invention]

The present invention provides a method for preparing a nanoparticle by using a carbon nanotube. The carbon nanotube includes carbon having a sp² hybrid bond, and is formed in a structurally stable shape. For this reason, it shows mechanical properties stronger (100 times or more) than steel. In the method according to the present invention, such a carbon nanotube is collided with a material by a physical force, thereby milling the material.

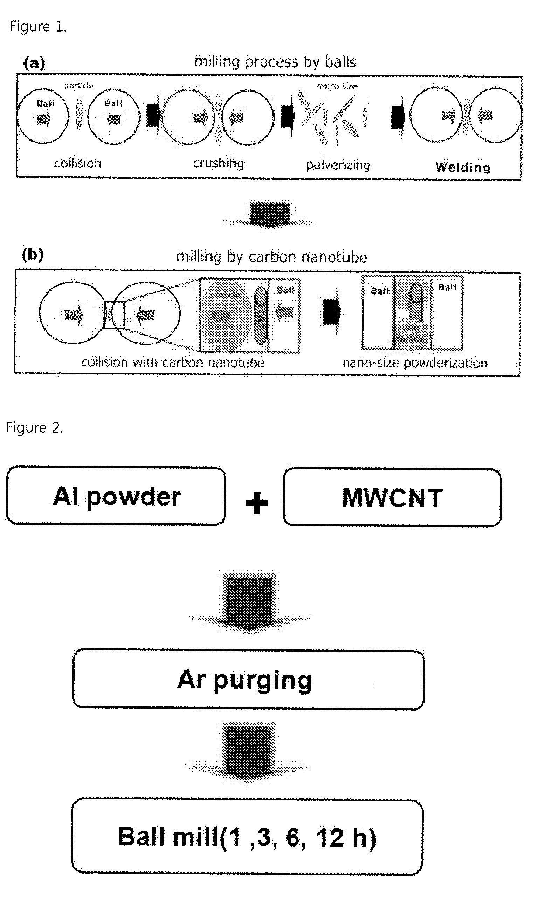

The inventive preparation method largely includes a milling step by balls and a milling step by a carbon nanotube. FIG. 1 is a conceptual view illustrating the mechanisms of the present invention. In order to realize the present invention, as shown in FIG. 1a, a pulverizing step by balls during the ball milling has to be preceded. As the pulverizing step of powder particles by balls is advanced, the particles are generally welded together while not being further pulverized. For this reason, there is a limitation in reducing the size of particles through a milling method by a ball mill. Meanwhile, the use of a carbon nanotube can inhibit particles from being welded together. Furthermore, the carbon nanotube mills the particles. The conceptual view shown in FIG. 1b illustrates the mechanism where the carbon nanotube mills a micro-sized particle into nano-size particles. Through such a mechanism for milling a micro-particle by a carbon nanotube, it is possible to mill particles made of various kinds of materials (metal, polymer, ceramic, or the like).

Hereinafter, the present invention will be described in more detail with reference to Examples below. However, the following examples are illustrative only, and the scope of the present invention is not limited thereto. The contents of documents cited in the present invention are hereby incorporated by reference.

### Example

### Example 1-1: Preparation of an aluminum nanoparticle by using a carbon nanotube

Examples of the present invention are based on the aluminum nanoparticle preparation process shown in FIG. 2. As a carbon nanotube, a multi-layered carbon nanotube with a thickness of 10 to 20nm, and a length of 10 to 20µm (Hanwha Nanotech, CM95) was used. Aluminum powder with a size of 70µm was bought from Samchun Chemical. The aluminum particles and the carbon nanotube were introduced in a stainless steel ball mill jar (Taemyong science) made of SKD 11, and then purged by inert gas (argon) to inhibit oxidation of the aluminum. The carbon nanotube was used in 50wt%. For ball milling, milling was carried out at 400rpm for 1 hour, 3 hours, 6 hours, and 12 hours. Herein, a ball used for milling was a zirconia ball (Daehan, DH. ML 1032) having a diameter of 5mm.

### Example 1-2: analysis of the prepared aluminum nanoparticle

### A. Photographic analysis

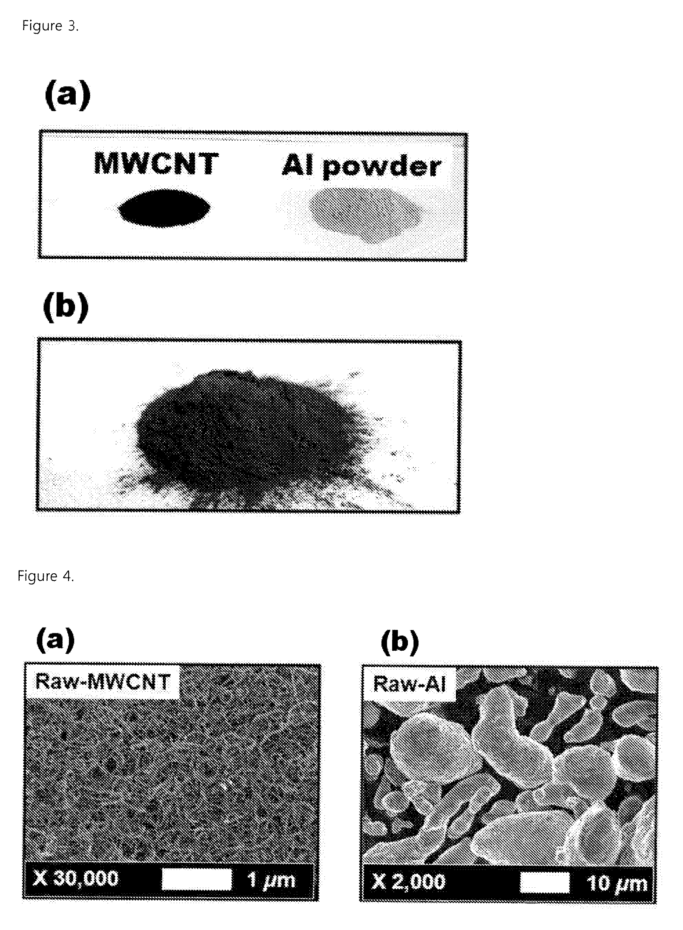

FIG. 3 shows photographs of an aluminum nanoparticle test sample, observed by a digital camera (Nikon, koolpix-3700) when the aluminum nanoparticle was prepared by using a carbon nanotube. FIG. 3a shows carbon nanotubes in 50wt%, and aluminum particles before a milling step. FIG. 3b shows aluminum nanoparticles after the milling step. The volume of the aluminum nanoparticles was increased compared to that before the milling step. Thus, it can be found that the aluminum particles were micronized.

### B. electron microscopic (SEM) analysis

FIG. 4 shows a raw sample before a nanoparticle preparation process. FIG. 4a is an electron microscopic (SEM) photograph (JEOL, JSM700F) observed at 30,000x of a carbon nanotube. The carbon nanotube has a diameter of 10 to 20nm, and a length of 10 to 20µm. FIG. 4b is a photograph observed at 2,000x magnification of a raw aluminum. The sizes of the observed aluminum particles are non-uniform, and most of them are 10 µm or more.

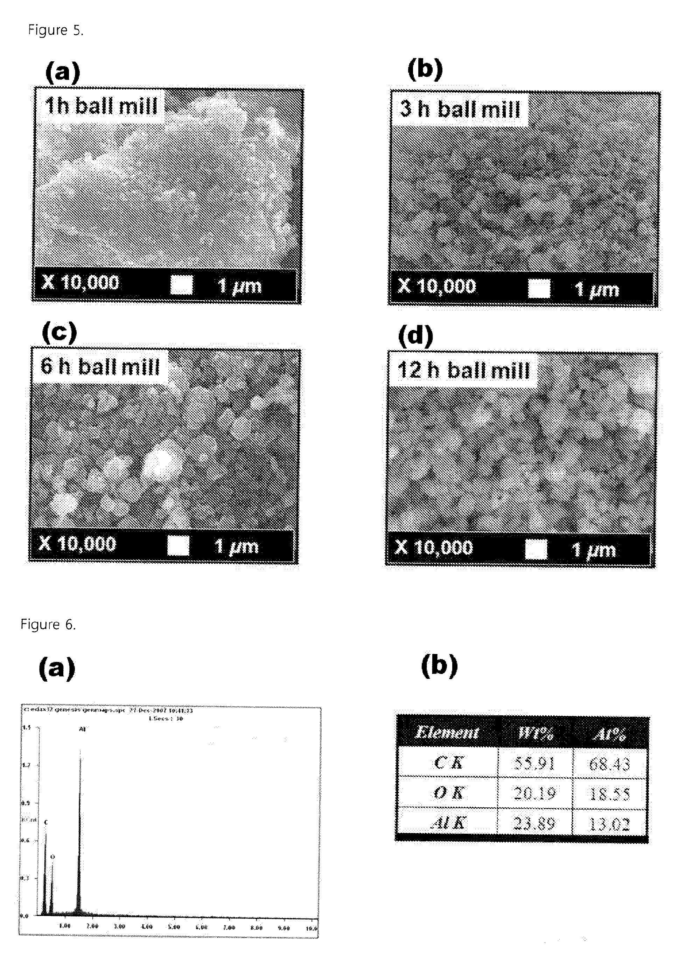

FIG. 5 shows electron microscopic photographs of an aluminum nanoparticle prepared by using a carbon nanotube. FIG. 5a is an electron microscopic photograph observed at 10,000x magnification after 1-hour ball milling. After the 1hour of milling, the aluminum particles constitute a lump. However, on the surface, nanoparticles were observed. FIGs. 5b to 5d are electron microscopic photographs after milling for 3 to 12 hours. Through the electron microscopic analysis, it was found that the aluminum particles were completely changed into nanoparticles after milling for 3 hours. Accordingly, it was found that the process of changing an aluminum particle into a nano particle is carried out in a range of 1 to 3 hours.

### C. component analysis (EDS)

FIG. 6 shows component analysis results obtained by EDS (energy dispersive spectroscopy) (Oxford) of an aluminum nanoparticle prepared by using a carbon nanotube. The component analysis was carried out after a bulk aluminum particle was milled for 1 hour. FIG. 6a shows a component spectrum of EDS. FIG. 6b shows a quantitative component analysis table obtained based on the spectrum of FIG. 6a. In the analysis table, since the carbon component is included, it can be assumed that within the aluminum nanoparticle, the carbon nanotube is included.

### D. transmission electron microscopic (TEM) analysis

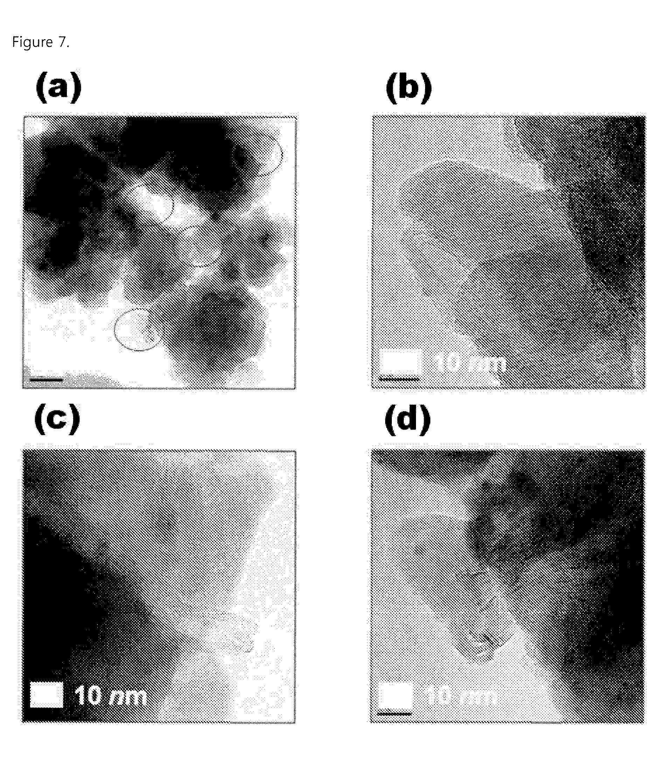

FIG. 7 shows photographs of an aluminum nanoparticle, observed by a transmission electron microscope (TEM) (JEOL, JEM2100F). Through the transmission electron microscope, it is possible to observe a carbon nanotube within a particle. The observation by the transmission electron microscope, on the test sample, was carried out after the aluminum particle was milled for 1 hour. FIG. 7a shows the measurement result of a cluster of an aluminum nanoparticle. FIGs. 7b to 7d show enlargement analysis results of the measurement result of 7a. When the cluster of the nanoparticle was analyzed, it can be observed that carbon nanotubes are included within nanoparticles and between nanoparticles. Through the analysis results, it can be found that a carbon nanotube performs a role of milling an aluminum particle.

### E. Analysis on size and distribution of aluminum nanoparticles by DLS (Dynamic light scattering)

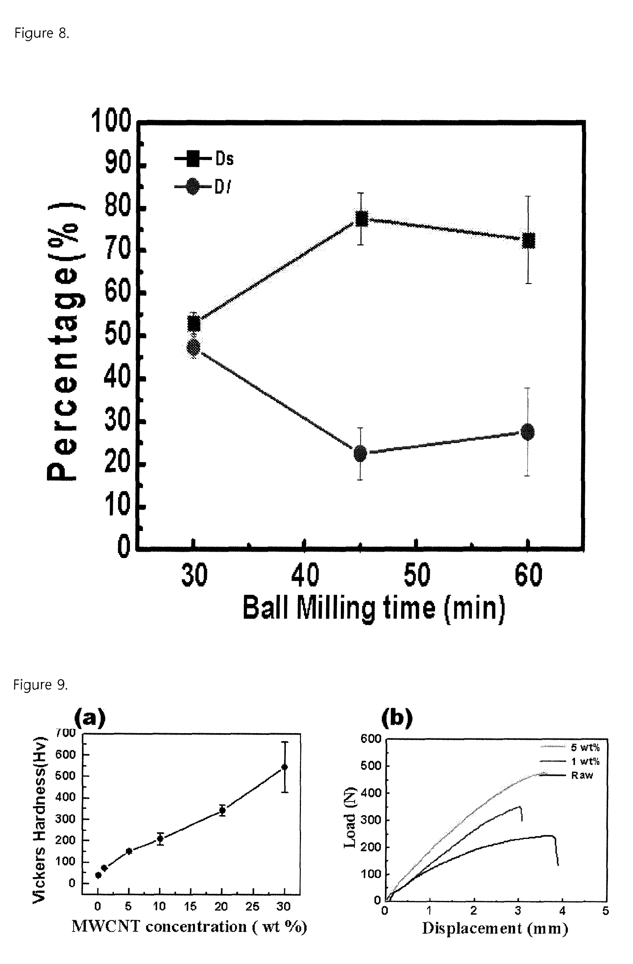

FIG. 8 shows the measurement result of the distribution according to the sizes of aluminum, obtained by DLS (Photal otsuka electronics, ELS-8000). In this Example, particle size distribution was measured during ball milling for less than 1 hour by using a carbon nanotube in 5 wt%. In FIG. 8, the x axis indicates a ball milling time, and the y axis indicates a percentage. Ds is a result obtained by measuring a group with a particle size of less than 1µm, and Dl is a result obtained by measuring a group with a particle size of greater than 1 µm. After 30 min from the start of ball milling, in the particle size distribution, the ratio of particles with a particle size of less than 1 µm, and the ratio of particles with a particle size of greater than 1µm were similar (about 50%) to each other. After 45 min from the start of ball milling, the ratio of particles with a particle size of less than 1 µm was about 80%, in which a large amount of nanoparticles were prepared. Accordingly, it can be found that an aluminum particle is changed into a nano-size according to the ball milling time.

### F. mechanical property analysis

In this Example, mechanical properties of a test sample of an aluminum nanoparticle prepared by the present invention were measured. For this Example, an aluminum nanoparticle prepared by using a carbon nanotube was sintered by spark plasma sintering. The sintering is to obtain bulk powder. It is known that as the particle size of powder is decreased, the mechanical properties are improved. FIG. 9a shows the measurement values of hardness of a test sample obtained by spark plasma sintering. The hardness was measured according to the concentration of a carbon nanotube. In a test sample obtained without a carbon nanotube, the hardness was 50 Hv, while in a test sample prepared by using a carbon nanotube in 30 wt%, the hardness was 500Hv or more. Also, a test sample prepared by the same method as described above was processed into a tensile test sample, and then its tensile property was measured. A raw aluminum showed a tensile stress of 93 MPa. The test sample prepared by using a carbon nanotube showed 134 MPa (carbon nanotube: 1 wt %) and 167 MPa (carbon nanotube: 5 wt %). In other words, the tensile stress was increased by about 80%. The raw aluminum showed a Young's modulus of 372MPa, the carbon nanotube in 1 wt% showed 650MPa, and the carbon nanotube in 5 wt% showed 839MPa. In other words, the Young's modulus was increased twice or more. Accordingly, it can be found that the nanoparticle prepared by using a carbon nanotube showed improved mechanical properties.

### G. electrical property analysis

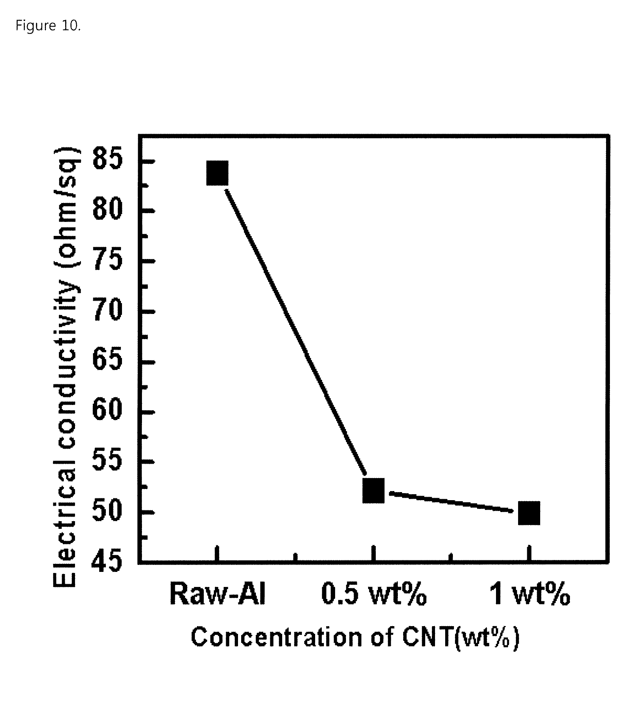

In this Example, on a test sample from a nanoparticle prepared by a carbon nanotube, electrical conductivity was measured. An aluminum bulk particle was added to an aluminum nanoparticle including a carbon nanotube so that the particles can be welded, and then the particles were prepared in a size of several millimeters. Then, the welded particles were added to a conventional alloy ALDC 12.1 (Woosin Metal Co. Ltd, KSD2331), followed by melting. FIG. 10 shows the measurement result of the electrical conductivity of an alloy having the test sample (prepared by a carbon nanotube) molten therein. A raw test sample showed a resistance of 84 ohm/sq while a test sample including a carbon nanotube in 0.5 wt% showed a resistance of 52 ohm/sq, and a test sample including a carbon nanotube in 1 wt% showed a resistance of 50 ohm/sq. Through the result of this Example, it was found that when a nanoparticle prepared by using a carbon nanotube is used, it is possible to achieve improved electrical conductivity.

### H. ignitability analysis

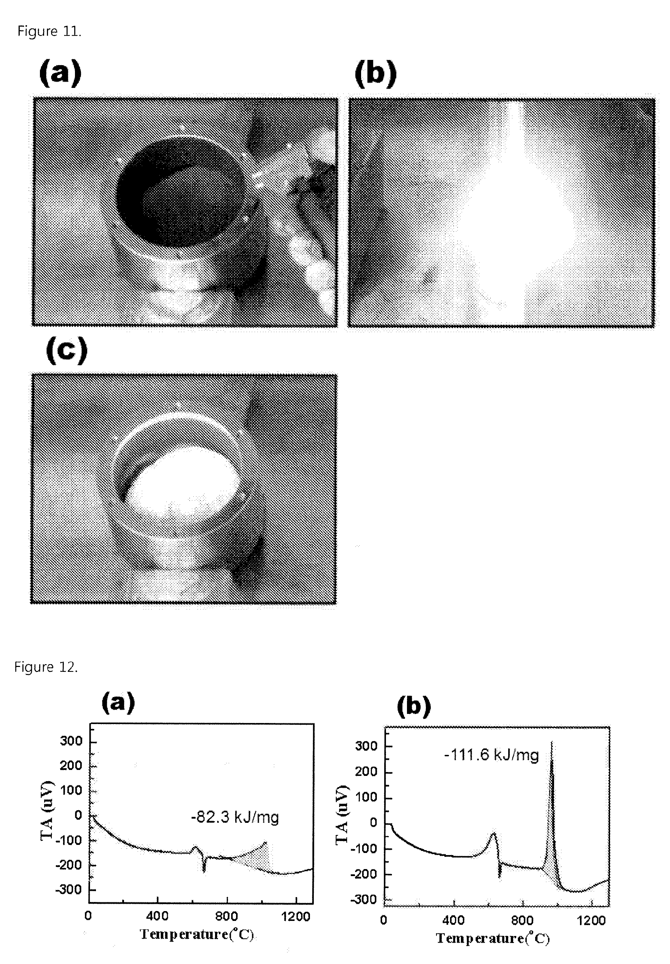

In this Example, the oxidative property of an aluminum nanoparticle was measured. In general, aluminum is known to be highly oxidative. When aluminum is changed into a nanoparticle, a large amount of aluminum atoms can be oxidized at once due to a high specific surface. Accordingly, the aluminum nanoparticle has an ignitability different from that of a general aluminum powder. Also, a carbon nanotube is known to be a highly heat conductive material. For this reason, the carbon nanotubes included in the aluminum nanoparticles transfer heat between nanoparticles, thereby more effectively carrying out oxidation. FIG. 11 shows the results of oxidative property measurement of an aluminum nanoparticle prepared by using a carbon nanotube. FIG. 11a is a photograph of an aluminum nanoparticle before firing. The firing of the aluminum nanoparticle was carried out by using gas torch. FIG. 11b is a photograph during an oxidation reaction after firing through a gas torch. During the oxidation reaction, an infrared thermometer (OPL-7) was used to measure the temperature. As a result, it was found that the temperature increased up to 1200°C. FIG. 11c is a photograph after the completion of the oxidation reaction. The aluminum which has been subjected to the oxidation reaction became aluminum oxide and its color was changed to white. FIG. 12 shows the results of measurement of oxidation heat generated by oxidation of an aluminum nanoparticle, which were obtained by DTA (SEICO INST.(Japan), Seiko Exstar6000). The DTA is a machine for measuring heat generation or heat absorption caused by phase change by increasing the temperature of a corresponding material at a predetermined rate. In this Example, while the temperature was increased at a rate of 10°C/min up to 1300°C, the change of heat was observed. FIG. 12a is a measurement result of a commercially available aluminum particle (Samchun Chemical) with a size of 3µm. The firing of aluminum was carried out at 650°C or more and the firing heat was -82.3 kJ/mg. FIG. 12b is a measurement result of an aluminum nanoparticle prepared by the present invention. The firing heat measured on the aluminum nanoparticle was -111.6 kJ/mg, and the aluminum nanoparticle showed a higher ignitability than a conventional commercially prepared aluminum particle. Accordingly, through the result of this Example, it can be determined that when an aluminum nanoparticle is prepared by using a carbon nanotube, it can be applied to ignitable materials such as an explosive, spacecraft fuel, or solid fuel, due to high oxidative property.

### Example 1-3: preparation of an iron nanoparticle by using a carbon nanotube, and electron microscopic (SEM) analysis

An iron nanoparticle was prepared in the same manner as described in Example 1-1 except that a carbon nanotube was used in 10 wt%, and ball milling was carried out for 6 hours.

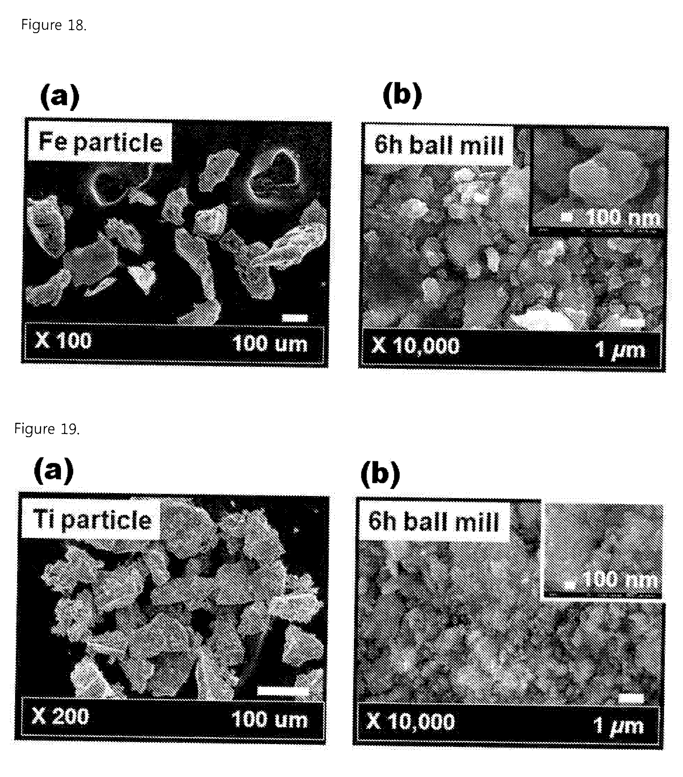

An iron nanoparticle prepared by using a carbon nanotube, before/after the preparation, was analyzed by an electron microscope (SEM) (see FIG. 18). FIG. 18a is a photograph of a raw iron particle, observed at 100x magnification. FIG. 18b is a photograph of an iron nanoparticle obtained by a carbon nanotube through milling. Through analysis, it can be found that the size of an iron particle was reduced to a nano-size of 1 µm or less. Accordingly, according to the present invention, it is possible to prepare an iron nanoparticle by using a carbon nanotube.

### Example 1-4: preparation of a titanium nanoparticle by using a carbon nanotube, and electron microscopic (SEM) analysis

A titanium nanoparticle was prepared in the same manner as described in Example 1-1 except that a carbon nanotube was used in 16 wt%, and ball milling was carried out for 6 hours.

A titanium nanoparticle prepared by using a carbon nanotube, before/after the preparation, was analyzed by an electron microscope (SEM) (see FIG. 19). FIG. 19a is a photograph of a raw titanium particle, observed at 100x magnification. FIG. 19b is a photograph of a titanium nanoparticle obtained by a carbon nanotube through milling. Through analysis, it can be found that the size of a titanium particle was reduced to a nano-size of 1 µm or less. Accordingly, according to the present invention, it is possible to prepare a titanium nanoparticle by using a carbon nanotube.

### Example 2-1: preparation of a polymer nanoparticle by using a carbon nanotube

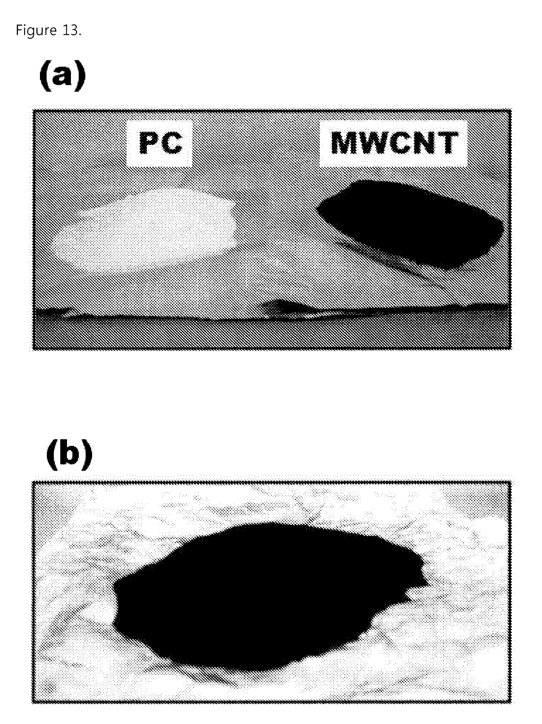

In this Example, a polymer nanoparticle was prepared by using a carbon nanotube. The carbon nanotube used in this Example was C-150 P (manufactured by Bayer). The polymer was polycarbonate (Samsung CHEIL INDUSTRIES, ISO-14000). This Example was carried out in a similar manner to that in Example 1-1. The milling was carried out for 6 hours. FIG. 13 shows polycarbonate before/after milling. FIG. 13a is a photograph of polycarbonate before milling, and a carbon nanotube was added in 20 wt%. FIG. 13b is a photograph of polycarbonate after 6 hours of milling by the carbon nanotube. It was observed that after the milling, the apparent volume was increased. From this result, it is assumed that a polycarbonate nanoparticle was formed.

### Example 2-2: electron microscopic (SEM) analysis of the prepared polymer nanoparticle

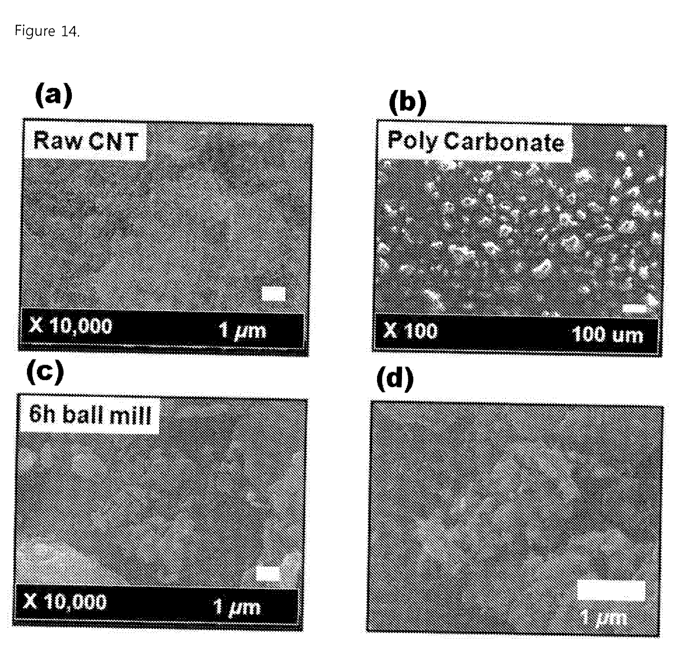

FIG. 14 is the analysis result of a polycarbonate nanoparticle prepared by using a carbon nanotube, which was obtained by an electronic microscope. FIG. 14a is an electron microscopic photograph of a raw carbon nanotube, observed at 10,000x magnification, and the carbon nanotube has a diameter of 5 to 20nm, and a length of about 10µm. FIG. 14b is an electron microscopic photograph of polycarbonate, observed at 100x magnification. The polycarbonate particle had a diameter of about 100 um. FIG. 14c is an electron microscopic photograph (10,000x magnification) of polycarbonate obtained by 6hours of milling. FIG. 14d is a 1000x enlarged photograph of FIG. 14c. Through the analysis, it was found that polycarbonate was milled into a nanoparticle by a carbon nanotube. Accordingly, according to the present invention, it is possible to prepare a polymer nanoparticle by using a carbon nanotube.

### Example 3-1: preparation of a ceramic nanoparticle by using a carbon nanotube

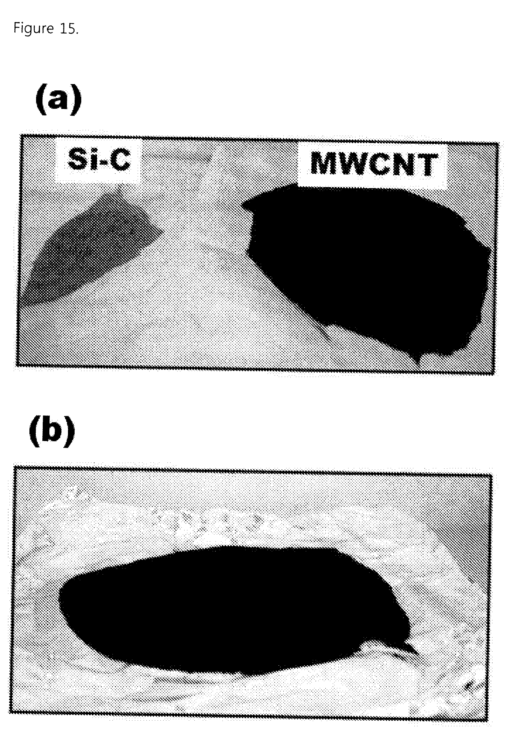

In this Example, a ceramic nanoparticle was prepared by using a carbon nanotube. As the ceramic, Silicon carbide (Aldrich, 357391, 400 mesh) was used. As the carbon nanotube, C 150-P (manufactured by bayer) was used like Example 2-1. The concentration of the carbon nanotube was 50 wt%. This Example was carried out in a similar manner to that in Example 1-1. The milling was carried out for 6 hours. FIG. 15 shows ceramic before/after milling. FIG. 15a is a photograph of ceramic before milling, and 15b is a photograph of ceramic milled into a nanoparticle. It was observed that after the milling, the apparent volume was increased. From this result, it is assumed that a silicon carbide nanoparticle was formed.

### Example 3-2: electron microscopic (SEM) analysis of the prepared ceramic nanoparticle

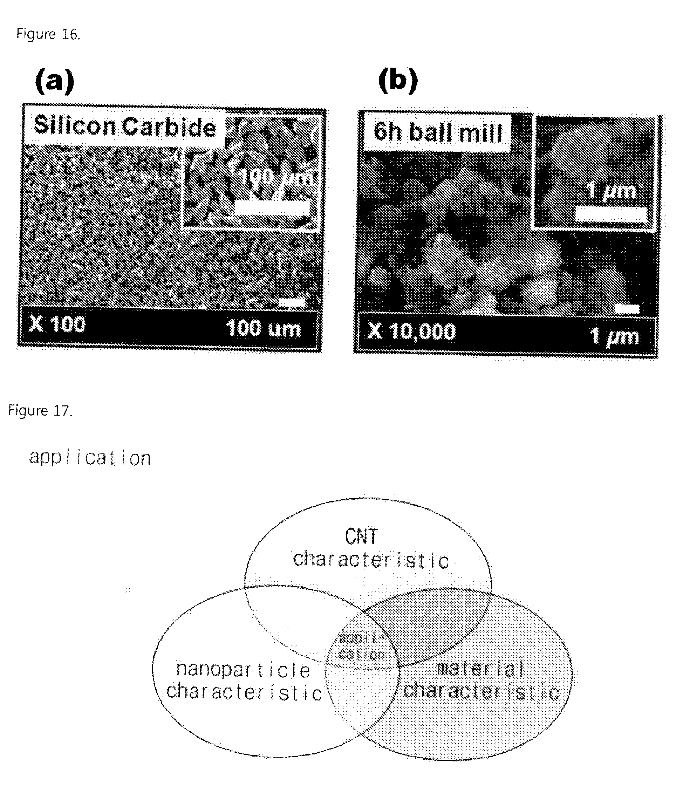

In this Example, the silicon carbide nanoparticle prepared by using the carbon nanotube was analyzed by an electron microscope. FIG. 16 shows a silicon carbide and a silicon carbide nanoparticle, which were obtained by an electronic microscope. FIG. 16a is a photograph of a raw silicon carbide, observed at 100x magnification. The particle ranges from 10 to 30 µm. FIG. 16b is an electron microscopic photograph of a silicon carbide particle obtained by a carbon nanotube through milling. Through the analysis, it was found that the size of the silicon carbide particle was reduced to a nano-size of 1 µm or less. Accordingly, according to the present invention, it is possible to prepare a ceramic nanoparticle by using a carbon nanotube.

Although several exemplary embodiments of the present invention have been described for illustrative purposes, those skilled in the art will appreciate that various modifications, additions and substitutions of equivalents are possible, without departing from the scope and spirit of the invention as disclosed in the accompanying claims. Thus, it is possible to employ specific states and materials in the description of the present invention. Although a specific embodiment presently regarded as the best mode has been disclosed herein in detail, these Examples are not intended to be limiting with respect to the scope of the invention.

### [ Industrial Applicability]

When the high oxidation property of aluminum, the high specific surface of a nanoparticle, and the high heat conductivity of a carbon nanotube are used, it is possible to cause an oxidation reaction within a short period of time. Thus, the nanoparticle can be used as an ignition material such as spacecraft fuel or gunpowder. Also, it can be used as a solid fuel through adjustment of a reaction time. Furthermore, it can be used as a smoke powder since it can have a high temperature of 1200 °C or more. Also, due to the lightness of aluminum and the mechanical properties of a carbon nanotube, the nanoparticle can be used as a light and strong high-strength hybrid advanced material. FIG. 17 shows a conceptual view on the applicability of a nanoparticle prepared by the present invention.

## Claims

1. A method for preparing a nanoparticle, the method comprising the steps of:
(a) preparing a mixture of a powder particle and a carbon nanotube; and
(b) ball milling the mixture.

2. The method as claimed in claim 1, wherein the carbon nanotube is at least one selected from the group consisting of a single walled carbon nanotube (SWNT), a double-walled carbon nanotube (DWNT), a thin multi-walled carbon nanotube and a multi-walled carbon nanotube (MWNT).

3. The method as claimed in claim 1, wherein the powder particle is a metal.

4. The method as claimed in claim 3, wherein the metal is selected from the group consisting of gold, silver, copper, aluminum, manganese, iron, tin, zinc and titanium.

5. The method as claimed in claim 3, wherein the metal is aluminum.

6. The method as claimed in any one of claims 1 to 5, further comprising the step of purging with argon (Ar) during the step (a).

7. The method as claimed in any one of claims 1 to 5, wherein ball milling is carried out for 0.5 to 12 hours at 100 rpm to 5000 rpm.

8. The method as claimed in claim 6, wherein ball milling is carried out for 0.5 to 12 hours at 100 rpm to 5000 rpm.

9. A nanoparticle composite comprising a powder particle milled by a carbon nanotube through ball milling, and the carbon nanotube.

10. The nanoparticle composite as claimed in claim 9, wherein the carbon nanotube is at least one selected from the group consisting of a single walled carbon nanotube (SWNT), a double-walled carbon nanotube (DWNT), a thin multi-walled carbon nanotube and a multi-walled carbon nanotube (MWNT).

11. The nanoparticle composite as claimed in claim 9 or 10, wherein the powder particle is a metal.

12. The nanoparticle composite as claimed in claim 11, wherein the metal is selected from the group consisting of gold, silver, copper, aluminum, manganese, iron, tin, zinc and titanium.

13. The nanoparticle composite as claimed in claim 11, wherein the metal is aluminum.

14. The nanoparticle composite as claimed in claim 9, wherein the powder particle has a size of 1 µm or more and 1 cm or less.

15. A method for preparing a nanoparticle, the method comprising the steps of:
(a) preparing a mixture of a polymer powder particle and a carbon nanotube; and
(b) ball milling the mixture.

16. A nanoparticle composite comprising a polymer powder particle milled by a carbon nanotube through ball milling, and the carbon nanotube.

17. A method for preparing a nanoparticle, the method comprising the steps of:
(a) preparing a mixture of a ceramic powder particle and a carbon nanotube; and
(b) ball milling the mixture.

18. A nanoparticle composite comprising a ceramic powder particle milled by a carbon nanotube through ball milling, and the carbon nanotube.
